# EUROPEAN PATENT APPLICATION

(11) **EP 4 105 382 A1**
(43) Date of publication of application: **21.12.2022**
(21) Application number: 21753223.3
(22) Date of filing: 21.01.2021
(51) Int. Cl.: D21H 13/02, D21H 21/16, D21H 21/20, D21H 15/00, D21H 25/04

(54) **COMPOSITION FOR MANUFACTURING PAPER AND METHOD FOR MANUFACTURING PAPER HAVING IMPROVED WET STRENGTH**

(30) Priority: 13.02.2020 KR 20200017952
(71) Applicant: CJ Cheiljedang Corporation, Seoul 04560 (KR)
(72) Inventor: KIM, Grace, Suwon-si, Gyeonggi-do 16495 (KR); KIM, Do Wan, Suwon-si, Gyeonggi-do 16495 (KR); CHO, Kyoung Sik, Suwon-si, Gyeonggi-do 16495 (KR); CHOI, Hye Min, Suwon-si, Gyeonggi-do 16495 (KR); HONG, Seok Jun, Suwon-si, Gyeonggi-do 16495 (KR)
(74) Representative: Cabinet Laurent & Charras
(86) International application number: PCT/KR2021/000845
(87) International publication number: WO 2021/162270

(57) **Abstract**

The present application relates to a composition for manufacturing paper and a method for manufacturing paper using same. The composition for manufacturing paper of the present application comprises a pulp fiber and a polymer fiber, and the content ratio between the pulp fiber and the polymer fiber is 50:50 to 95:5.

## Description

### TECHNICAL FIELD

The present application relates to a composition for manufacturing paper and a method for manufacturing paper using the same.

Particularly, the present application relates to a composition for manufacturing paper having improved wet strength and a method for manufacturing thereof.

### BACKGROUND ART

With the recent emergence of environmental issues regarding plastic use, social demands to reduce the use of plastic in various fields are increasing. Accordingly, even in the food industry in which many plastics are used, research on developing a packaging material for food which is environmentally friendly and can reduce the use of plastics is ongoing.

Meanwhile, according to the above-described request, paper containers are being practically used as an alternate product for a conventional disposable synthetic resin packaging material in terms of using pulp, a natural material. In addition, when a packaging material is made of paper material alone, there are unsuitable problems such as the easy tearing or water soaking properties of the paper, and the unique smell of the paper permeating the food.

Further, there is also an attempt to reduce the environmental pollution burden by using a packaging material which is made by using biodegradable resins decomposed by microorganisms as a raw material instead of nondegradable petrochemical-based plastic raw materials which have a high environmental burden. However, it has been pointed out that if raw materials of disposable packaging material are replaced with biodegradable resins, expensive and rare raw materials are used as a polymerization monomer, and thus the production cost is increased and it is not appropriate.

Consequently, eco-friendly food-packaging materials having superior physical properties is continuously required.

### DISCLOSURE OF THE INVENTION

### TECHNICAL PROBLEM

The present application is intended to provide a composition for manufacturing paper which is eco-friendly and has excellent physical properties so as to replace non-degradable plastic packaging materials, a method for manufacturing paper using the same, and paper manufactured thereby.

### TECHNICAL SOLUTION

According to an aspect of the present application, there is provided a composition for manufacturing paper, the composition comprises a pulp fiber and a polymer fiber, wherein the content ratio betweenthe pulp fiber and the polymer fiber is 50:50 to 95:5, and the polymer fiber is a polymer short fiber or a polymer powder.

According to another aspect of the present application, there is provided a method for manufacturing paper, the method comprising: manufacturing paper paste by disintegrating and refining a pulp fiber and a polymer fiber; molding the paper paste; and molding and treating the molded product of the paper paste or the paper paste at a high temperature and high pressure, wherein the content ratio between the pulp fiber and the polymer fiber in the paper paste is 50:50 to 95:5, and the polymer fiber is a polymer short fiber or a polymer powder.

According to another aspect of the present application, there is provided a composition for manufacturing the paper and/or paper manufactured according to the method for manufacturing the paper.

### ADVANTAGEOUS EFFECTS

The composition for manufacturing paper according to the present application can be used to manufacture paper that can reduce the amount of non-degradable plastic used.

In addition, the composition for manufacturing paper according to the present application can be used to manufacture paper having improved limited physical properties of paper materials, such as wet strength, moisture barrier properties, waterproofness, oxygen barrier properties, formability, and thermal formability.

In another aspect, the method for manufacturing paper according to the present application can be used to manufacture the paper having the above-described characteristics. In particular, paper can be manufactured which has remarkably improved wet strength.

### MODE FOR CARRYING OUT THE INVENTION

Hereinafter, the present application will be described in detail.

According to an aspect of the present application, there is provided a composition for manufacturing paper, the composition comprising a pulp fiber and a polymer fiber, wherein a content ratio betweenthe pulp fiber and the polymer fiber is 50:50 to 95:5, and the polymer fiber is a polymer short fiber or a polymer powder.

The composition for manufacturing paper comprises a pulp fiber and a polymer fiber, and the polymer fiber are made of a polymer short fiber, a polymer powder, or a mixture of these shapes. Specifically, the content ratio between the pulp fiber and the polymer fiber is 50:50 to 95:5, which is expressed as a pulp fiber:a polymer fiber. More specifically, the content ratio between the pulp fiber and the polymer fiber is not limited thereto, but may be, for example, 55:45 to 95:5, 60:40 to 90:10, 65:35 to 95:5, 70:30 to 90:10, 75:25 to 95:5, 75:25 to 85:15 or 80:20 to 85:15.

The content ratio between the pulp fiber and the polymer fiber is not limited thereto, but when the content ratio is within the above range, the composition may be suitable for a paper manufacturation process or may exhibit excellent effects in terms of physical properties of paper such as wet strength, moisture barrier properties, and oxygen barrier properties.

In the composition for manufacturing paper, the pulp fiber may be utilized in conjunction with the polymer fiber to form a composite network of the pulp fiber and the polymer fiber. In this case, the mechanism of the present application is not limited thereto, but the hydrophilicity in the pulp fiber may be reduced by the polymer fiber having hydrophobicity by means of the formed composite network, thereby exhibiting an effect of reducing the amount of moisture absorbed into the paper. Specifically, the composite network may reduce pores within the pulp fiber or mask the hydrogen bond by a hydrophilic group, e.g., a hydroxyl group, thereby exhibiting an effect of reducing the amount of moisture absorbed into the paper. In addition, the cross-linking agent is introduced as an additive to form the cross-linking bond between the hydroxyl groups contained in the hydrophilic polymer and the hydrophilic cellulose, thereby reducing the amount of water absorbed by the paper and improving the wet strength.

In the present application, the pulp fiber may comprise at least one selected from the group consisting of a wood pulp fiber and a non-wood pulp fiber according to a raw material for obtaining fiber. The wood pulp fiber may comprise fiber obtained from softwood pulp (SwP), hardwood pulp (HwP) or a mixture thereof. The non-wood pulp fiber may comprise fiber obtained from straw pulp, bagasse pulp, reed pulp, bamboo pulp, bast fiber pulp, rag pulp, cotton pulp, or a mixture thereof.

According to a processing method of the raw material, the pulp fiber may comprise, as a raw material, pulp made by mechanically and/or chemically treating wood or other fiber plant, for example. For example, the pulp fiber may be mechanical pulp, such as ground wood pulp (GP), refiner pulp (RP), or thermo-mechanical pulp (TMP), which is obtained by mechanically grinding wood or other plant; chemical pulp, such as kraft pulp (KP), sulphite pulp (SP) or semi-chemical pulp (SCP), which is obtained by treating wood or other plants with various chemicals to remove non-fiber; and recovered paper pulp, such as defibrated recovered paper pulp, or deinking pulp (DIP), which is made of waste paper.

In one aspect, the pulp fiber may comprise wood pulp fiber obtained from a coniferous tree having a long fiber length, strong fiber properties, and excellent strength properties.

In one aspect, the pulp fiber may comprise pulp fiber processed by mixing softwood and a cotton fiber and/or softwood and a non-wood fiber in consideration of the formability of paper when using a method for manufacturing a tray or packaging pouch using a vacuum forming or pressure forming manner.

In the present application, the polymer fiber may be a polymer short fiber, a polymer powder, or a mixture of these shapes. Here, the "a short fiber" may refer to a fiber having a fiber length of 500 µm to 3 mm, but is not limited thereto. In addition, the "short fiber" may exhibit a thickness of 0.5 to 10 denier per fiber length, for example, 0.5 to 6 denier, but is not limited thereto.Also, the "powder" may have a particle diameter (D₅₀) of 3 µm to 3 mm, but is not limited thereto.

Furthermore, the polymer fiber may comprise at least one selected from the group consisting of a petroleum-based polymer short fiber and a biodegradable polymer short fiber.

The petroleum-based polymer may be a polyolefin-based polymer such as polyethylene terephthalate (PET) or high density polyethylene (HDPE), a polyvinyl alcohol (PVA), a blend thereof, or a copolymer of each monomer.

The biodegradable polymer refers to a polymer which is decomposed into a low molecular compound by microorganisms in the natural world, and the kind of the biodegradable polymer may be, for example, at least one selected from among poly lactic acid (PLA), thermoplastic starch (TPS), aliphatic polyester (AP), polycaprolactone (PCL), polyglycolic acid (PGA), poly butylene succinate (PBS), poly butylene adipate terephthalate (PBAT), polyhydroxy alkanoate (PHA), and a mixture thereof, but is not limited thereto.In addition, a bio-derived polymer that can be biodegradable may be used as the biodegradable polymer. Such a bio-derived polymer that can be biodegradable may be, for example, at least one selected from among bio-polyethylene (Bio-PE), bio-polyethyleneterephthalate (Bio-PET), bio-polytrimethylene terephthalate (Bio-PTT), bio-polyamide (Bio-PA), bio-polypropylene (Bio-PP), and a mixture thereof, but is not limited thereto. In addition, it is possible to improve physical properties such as flexibility and heat resistance of the paper prepared by using the copolymer of each monomer constituting the above-described biodegradable polymer. In addition, it is possible to improve physical properties such as rigidity and heat resistance of the paper prepared by using the incorporation of talc, clay material, and the like into the above-described biodegradable polymer, the blend thereof, and the copolymer thereof.

In one aspect, the polymer fiber may comprise at least one selected from the group consisting of a PLA short fiber, a PET short fiber, and a HDPE short fiber.

The composition for manufacturing paper may further comprise at least one selected from the group consisting of a sizing agent, a strength agent, a retention aid, a wet strength agent, and a cross-linking agent, in addition to the pulp fiber and the polymer fiber.

The sizing agent may be added for increasing the water resistance of the paper by reducing micropores present in the paper, reducing spaces between fibers present on the surface of the paper, or improving the cause of a change in the form and dimension of the paper. The sizing agent is a hydrophobic material, and an internal sizing agent that is added during a paper-making process may include, but is not limited to, for example, an emulsion-type sizing agent such as AKD, ASA, wax, a dispersion rosin sizing agent, a solution type sizing agent such as a soap-type rosin sizing agent, or a mixture thereof. In one aspect, the internal sizing agent may be the AKD, and the AKD may be one in which a lactone ring in the molecule reacts with a hydroxyl group of cellulose to form a beta-ketoester bond, and in which a hydrophobic alkyl group is oriented outside the fiber to impart water resistance to the paper. In addition, a surface sizing agent, which can improve physical properties such as dimensional stability, water repellency, and surface water resistance of paper by being applied to the surface of the paper, may include, but is not limited to, at least one selected from the group consisting of starch, starch oxide, carboxymethyl cellulose (CMC), hydroxycellulose, sodium alginate, chitosan, polyvinyl alcohol (PVA), styrene-maleic anhydride (SMA), styrene acrylic emulsion (SAE), styrene acrylic acid (SAA), polyurethane, ethylene acrylic acid (EAA), and a mixture thereof.

The strength agent may be added for increasing a retention rate and supplementing the strength of paper by generating electrostatic attraction between fibers or between fiber-filling materials. The strength agent may include, but is not limited to, for example, a polyvinyl amine (PVAm), an amphoteric polyacrylamide (A-PAM), a cationic polyacrylamide (C-PAM), or a mixture thereof. In one aspect, the strength agent may be the C-PAM, and the C-PAM may modify the surface of an anionic material in the composition for manufacturing paper to form a strong polarity on the surface. The formed polarity may reduce the bonding between fibers and improve the strength of paper.

The retention aid may be added for improving the degree of retention of raw materials other than water in the composition for manufacturing paper during the manufacturation of paper by reaggregating fibers or other raw materials destroyed during a paper manufacturation process. The retention aid may comprise, but is not limited to, for example, silica, bentonite, fine polymer, or a mixture thereof. In one aspect, the retention aid may use anionic particles so as to pair with the case where a cationic material is used as the strength agent. For example, the use of silica may further improve the retention and dry strength of the composition for manufacturing paper together with the strength agent.

The wet strength agent may be added for enhancing the strength (wet strength) in a state in which the paper is completely saturated in water. The sizing agent may exhibit the function of inhibiting the penetration of water into paper, but there is a limitation in that strength reduction cannot be prevented when the paper is completely wet in water, and thus even when the paper is exposed to water, in order to maintain the strength of paper, the sizing agent and the wet strength agent are included together, thereby further improving the water resistance of paper. In addition, the water resistance and wet strength of the paper may be further improved by introducing a cross-linking agent and a polyvinyl alcohol that is a hydrophilic polymer to form a cross-linking bond among the polyvinyl alcohol, cross-linking agent, and cellulose.

As the wet strength agent, a permanent wet strength agent, a temporary wet strength agent, or a mixture thereof may be used. The permanent wet strength agent refers to a wet strength agent that does not exhibit a decrease in wet strength as the immersing time increases when the paper treated with the wet strength agent is immersed in water, and the temporary wet strength agent refers to a wet strength agent in which the wet strength of a wet strength paper is reduced as the immersing time increases. The wet strength agent may comprise, but is not limited to, for example, a melamine-formaldehyde resin, a urea-formaldehyde resin, an epoxidized polyamide resin, a glyoxalated polyacrylamide resin, polyethyleneimine, polyamide-epichlorohydrin, or a mixture thereof. In one aspect, as the wet strength agent, the temporary wet strength agent may be used.

In the present application, the composition for manufacturing paper may comprise at least one selected from the group consisting of a sizing agent, a strength agent, a retention aid, and a wet strength agent in a content for excellently improving the physical properties of paper, on the basis of the total content of the pulp fiber and the polymer fiber that are the main ingredients of the composition for manufacturing paper.

The content of the additive may comprise, but is not limited to, for example, 0.1-5 parts by weight of the sizing agent, 0.001-5 parts by weight of the strength agent, 0.001-0.5 parts by weight of the retention aid, and 0.1-10 parts by weight of the wet strength agent, on the basis of the total of 100 parts by weight of the pulp fiber and the polymer fiber. In one aspect, the content of the additive may comprise 0.3-5 parts by weight of the sizing agent, 0.01-0.1 parts by weight of the strength agent, 0.002-0.2 parts by weight of the retention aid, and 0.1-2 parts by weight of the wet strength agent, on the basis of the total of 100 parts by weight of the pulp fiber and the polymer fiber.

The cross-linking agent may be contained, for example, in an amount of 0.3-10 parts by weight on the basis of 100 parts by weight of the sizing agent, but is not limited thereto.

The composition for manufacturing paper may further comprise a solvent for manufacturing paper in addition to the above-mentioned ingredients, and the solvent is not particularly limited, and for example, water may be used as the solvent. The content of the solvent may be, for example, 99.9 wt% or less, such as, 90.0-99.9 wt%, 90-98 wt%, 90-97 wt%, 90-96 wt%, or 90-95 wt%, on the basis of the total weight of the composition for manufacturing paper.

In one aspect, the present application provides a method for manufacturing paper by using the composition for manufacturing paper.

The method for manufacturing paper comprises manufacturing paper paste by disintegrating and refining pulp fiber and polymer fiber; molding the paper paste; and molding and treating the molded product of the paper paste or the paper paste at high temperature and high pressure. Specifically, the content ratio of the pulp fiber and polymer fiber in the paper paste is 50:50 to 95:5. The more specific content ratio of the pulp fiber and polymer fiber is the same as described above in the composition for manufacturing paper.

First, the fiber film of the pulp fiber and polymer fiber is destroyed and removed, and the disintegrating and refining is performed at 40-50 °C in a prepared solvent such as water so as to form microfibers and small fibers, thereby preparing paper paste. The disintegrating and refining is performed until the fibers are sufficiently dissolved according to the types of pulp fibers and polymer fibers, and may be adjusted to suit product and process conditions, and, for example, the disintegrating and refining may be performed so as to have a refining degree of 200-500 ml, or 300-450 ml on the basis of Canada standard freeness (CSF), but the embodiment is not limited thereto.

In one aspect, the method may include additionally filling at least one selected from the group consisting of a sizing agent, a strength agent, a retention aid, and a wet strength agent into the paper paste prepared by disintegrating and refining the pulp fibers and polymer fibers, and such an additive is the same as described above in the composition for manufacturing paper. The order of each of the additives added is not particularly limited, and the additives may be sequentially or simultaneously added. For example, the sizing agent, the strength agent, the retention aid, and the wet strength agent may be sequentially added. In addition, the additive may be directly added to the prepared paste in the disintegrating and refining, or may be added to the diluted paper paste by adding a solvent to the prepared paste.

In one embodiment, the order of each additive is not particularly limited, but a specific additive needs to be introduced in order. For example, the C-PAM and polymer electrolytes (silica, bentonite, etc.), which are used as a strength agent and a retention aid, respectively, are materials used as a pair, and materials of opposite charges should be injected in order into a process of inducing aggregation of fibers, fine powders, and other ingredients in raw materials by charges.

Next, the method comprises molding the paper paste. The molding may be carried out by using a mold or by extrusion. More specifically, a sheet machine may be used to extrude the paper paste to form the paper in a sheet shape, and the paper may be formed into various desired shapes by using a mold in addition to the sheet shape. The molding process using the mold may be performed by a dry mold method in which the paper paste is injected into the mold, a wet mold method in which the mold is immersed in the paper paste, etc., and is not limited thereto.

The method comprises molding and treating a molded product of the paper paste or the paper paste at a high temperature and high pressure. Specifically, when the paper paste is extruded to prepare sheet-shaped paper, the paper paste may be treated at a high temperature and high pressure while being molded (for example, while being extruded). In addition, the paper paste formed into a desired shape may be treated at a high temperature and high pressure after the paper paste formed into a desired shape by using a mold is dried to remove the solvent, or without performing the drying and removing the solvent. The drying of the paper paste may be performed lest the cross-linking in the molded product be broken while the shape processed through molding is maintained, and for example, may be performed at 10-90% humidity and 110-250 °C, e.g., 180 °C.

The mechanism of the present application is not limited thereto, but the treating at a high temperature and high pressure may be intended to improve physical properties such as wet strength, moisture barrier properties, and tensile strength of the paper, for example, by using an action such as reduction of pores due to additional dissolution of polymer fibers, masking hydrogen bonds, or generating additional bonds between polymer fibers through the thermal pressure fusion to the formation of primary cross-linking between fibers and/or between fibers and additives through the molding.

In one aspect, the treating at a high temperature and high pressure may be carried out under temperature conditions equal to or higher than the glass transition temperature of the polymer fiber such that the polymer fiber to be used can be dissolved. For example, when a PET short fiber are used as the polymer fiber, the treating at a high temperature and high pressure may be performed at a temperature of 150-260 °C, 150-250 °C, 120-240 °C, 120-230 °C, 130-220 °C, 130-210 °C, or 125-200 °C. In addition, when a PLA short fiber is used as the polymer fiber, the treating at a high temperature and high pressure may be performed at a temperature of 150-200 °C, 150-190 °C, 160-190 °C, 170-190°C, or 175-185 °C. Also, when a HDPE short fiber is used as the polymer fiber, the treating at a high temperature and high pressure may be performed at a temperature of 90-170 °C, 95-170 °C, 95-160 °C, 95-150 °C, 100-140 °C, or 110-135 °C.

In one aspect, the treating at a high temperature and high pressure may apply pressure to the paper such that the fibers in the paper may form dense cross-linking without destroying the paper to be prepared. For example, a pressure of 0.5 kgf/cm² to 2 kg/cm² may be applied to the paper formed in the sheet shape by using the sheet machine, and a container or sheet may be formed by injecting a kneaded composition into a mold by using a pulp mold and applying a pressure of 0.5 kgf/cm² to 2 kg/cm².

In one embodiment, the sheet-shaped paper prepared by molding and treating the paper paste at a high temperature and high pressure may further be subjected to thermoforming (e.g., vacuum forming, pressure forming) after the treating at a high temperature and high pressure.

In another aspect, the present application provides paper manufacturedfrom the composition for manufacturing paper. In addition, the present application provides paper manufactured according to the method for manufacturing paper.

The paper according to the present invention exhibits the effects of having excellent physical properties limited of paper materials, and particularly, of excellently improving formability due to the complexation of the pulp fiber and polymer fiber in the paper paste.

Moreover, the paper according to the present application, for example, the sheet-shaped paper may be additionally processed to exhibit excellent utility as a packaging material such as a pouch or a container.

Hereinafter, the present invention will be described in detail according to examples.

### Experimental Example 1.

### [Manufacturation of Composition for Manufacturing Paper]

First, softwood pulp (softwood bleached kraft pulp obtained from Samwha paper, Co., Ltd.) and PET fiber (obtained from Huvis Corp.) were mixed to carry out disintegrating (30 minutes) and refining (10 minutes) at 40-50 °C. The refined raw materials were diluted and adjusted to a target concentration, and then additives were added in order of AKD, PAM, silica, and a wet strength agent. The specific compositions of the composition are listed in Table 1 below.

Next, the manufactured paper paste was formed to pulp or pulp/polymer short fiber composite material by using a rectangular sheet machine, dried (130 °C) and thermally treated at 140 °C for 10 seconds. However, the composition for preparing paper of Comparative Example 1 was not thermally treated to prepare paper.

**[Table 1]**

| Compositions | | Water | 1.2% concentration | | AKD (g) | C-PAM (g) | Silica (g) | Size fix (g) |
|---|---|---|---|---|---|---|---|---|
| | | | Pulp fiber (g) | PET short fiber (g) | | | | |
| Comparative Example 1 | Pulp fiber 100% | 100 | 1.2 | - | 0.06 | 0.0012 | 0.00024 | 0.02 |
| Example 1 | Pulp fibe 90%:PET short fibers 10% | 100 | 1. 08 | 0.12 | 0.06 | 0.0012 | 0.00024 | 0.02 |
| Example 2 | Pulp fiber 85%:PET short fiber 15% | 100 | 1. 02 | 0.18 | 0.06 | 0.0012 | 0.00024 | 0.02 |
| Example 3 | Pulp fiber 80%:PET short fiber 20% | 100 | 0.96 | 0.24 | 0.06 | 0.0012 | 0.00024 | 0.02 |

### [Tensile Strength Evaluation]

The manufactured paper was used to evaluate a tensile strength as follows.

Experimental method: both sides of a sample were grabbed by clamps under conditions of 15 mm in width and 20 mm in the measured distance under 1kN Load cell, and then the strength at the time of tensile fracture was measured by pulling the sample at a speed of 50 mm/min.

Experimental conditions: after the sample was immersed in water at 23 °C for 10 minutes or at 85 °C for 30 minutes, moisture was removed from the surface by Kimwipe, and then wet tensile strength was measured.

Measurement results are listed in Table 2 below:

**[Table 2]**

| Division | | Tensile strength, kgf | |
|---|---|---|---|
| | | Strength retention Wet | Strength retention Boil |
| Non Heat | Comparative Example 1 | 59% | 49% |
| Heat | Example 1 | 54% | 48% |
| | Example 2 | 71% | 66% |
| | Example 3 | 90% | 64% |

### Experimental Example 2.

### [Preparation of Composition for Preparing Paper]

First, a softwood pulp and a PLA short fiber or a HDPE short fiber were mixed to carry out disintegrating (10 minutes) and refining (2 minutes) at 40-50 °C. The refined raw materials were diluted and adjusted to a target concentration (1%), and then additives were added in order of AKD, PAM, silica, and a wet strength agent. The specific compositions of the composition are listed in Table 3 below.

Next, the prepared paper paste was formed to pulp or pulp/polymer short fiber composite material by using a rectangular sheet machine, dried (130 °C), and the composition with pulp fiber alone (Comparative Example 2) was not subjected to heat pressure treatment, the composition with PLA short fiber (Example 4) was subjected to heat pressure treatment at 175-185 °C for 1-10 seconds under 0.1-15 tons, and the composition with HDPE short fiber (Example 5) was subjected to heat pressure treatment at 110-135°C for 1-10 seconds under 0.1-15 tons, thereby making a sheet-shaped paper with a grammage of 300 g/m².

**[Table 3]**

| Composition | | Water | 1% concentration | | AKD (g) | C-PAM (g) | Silica (g) | Size fix (g) |
|---|---|---|---|---|---|---|---|---|
| | | | Pulp fiber (g) | Polymer short fiber (g) | | | | |
| Comparative Example 2 | Pulp fiber 100% | 100 | 1.0 | - | 0.05 | 0.0012 | 0.0002 | 0.02 |
| Example 4 | Pulp fiber 50%:PLA short fiber 50% | 100 | 0.5 | 0.5 | 0.05 | 0.0012 | 0.0002 | 0.02 |
| Example 5 | Pulp fiber 50%:HDPE short fiber 50% | 100 | 0.5 | 0.5 | 0.05 | 0.0012 | 0.0002 | 0.02 |

### [Physical Property Evaluation]

The paper manufactured above was used to evaluate moisture absorption, porosity, tensile strength, (cold water) moisture tensile strength and (hot water) moisture tensile strength as follows, and the results are listed in Table 4 below.
1) Moisture absorption: an amount of Cobb absorbed was measured under the conditions of 85 °C and 10 minutes by a waterproof property measurement experiment with respect to hot water.
- Calculation formula (post-absorption - pre-absorption)g / 0.01 m²

2) Porosity: the porosity is a performance for determining the degree of pores within paper that is a porous material, and an amount of air passed for a particular time or the time required for 100 cc of air to pass through a sample under atmospheric pressure was measured.
3) Tensile strength: both sides of the sample were grabbed by clamps under conditions of 15 mm in width and 20 mm in the measured distance under 1kN Load cell, and then the strength at the time of tensile fracture was measured by pulling the sample at a speed of 50 mm/min.
4) (Cold water) wet tensile strength: the tensile strength was measured after a sample cut to 15 mm in width was immersed into a room-temperature tap water for 10 minutes.
5) (Hot water) wet tensile strength: the tensile strength was measured after a sample cut to 15 mm was boiled in water at 85 °C for 10 minutes.

**[Table 4]**

| Division | Waterproofness, g/m² (Cobb) | Tensile strength kgf | (Cold water) Wet tensile strength | (Hot water) Wet tensile strength |
|---|---|---|---|---|
| Comparative Example 2 | 52.7 | 11.1 | 4.9 | 3.5 |
| Example 4 | 28.0 | 10.0 | 6.0 | 4.3 |
| Example 5 | 34.4 | 19.3 | 13.2 | 11.4 |

As confirmed through the experimental results, it can be confirmed that the paper manufacturedby using the composition for manufacturing paper to which the polymer short fibers are added and by being subjected to heat pressure treatment has improved physical properties such as waterproofness, tensile strength, and wet tensile strength.

## Claims

1. A composition for manufacturing paper, comprising: a pulp fiber and a polymer fiber,
wherein a content ratio between the pulp fiber and the polymer fiber is 50:50 to 95:5, and
wherein the polymer fiber is a polymer short fiber or a polymer powder.

2. The composition according to claim 1, wherein the pulp fiber comprises at least one selected from the group consisting of a wood pulp fiber and a non-wood pulp fiber.

3. The composition according to claim 2, wherein the pulp fiber comprises softwood pulp.

4. The composition according to claim 1, wherein the polymer fiber comprises at least one selected from the group consisting of a petroleum-based polymer short fiber and a biodegradable polymer short fiber.

5. The composition according to claim 4, wherein the polymer fiber comprises at least one selected from the group consisting of a PLA short fiber, a PET short fiber, and a HDPE short fiber.

6. The composition according to claim 1, wherein the content ratio between the pulp fiber and the polymer fiber is 80:20 to 85:15.

7. The composition according to claim 1, comprising at least one selected from the group consisting of a sizing agent, a strength agent, a retention aid, a wet strength agent, and a cross-linking agent.

8. The composition according to claim 7, comprising 0.1-5 parts by weight of the sizing agent, 0.001-5 parts by weight of the strength agent, 0.001-0.5 parts by weight of the retention aid, and 0.1-10 parts by weight of the wet strength agent, on the basis of the total of 100 parts by weight of the pulp fiber and the polymer fiber.

9. A method for manufacturing paper, the method comprising:
manufacturing paper paste by disintegrating and refining a pulp fiber and a polymer fiber;
molding the paper paste; and
molding the molded product of the paper paste or the paper paste and treating at a high temperature and high pressure,
wherein a content ratio between the pulp fiber and the polymer fiber in the paper paste is 50:50 to 95:5, and
the polymer fiber is a polymer short fiber or a polymer powder.

10. The method according to claim 9, wherein the molding is carried out by using a mold or by extrusion.

11. The method according to claim 9, comprising filling the paper paste with at least one selected from the group consisting of a sizing agent, a strength agent, a retention aid, a wet strength agent, and a cross-linking agent to treat the filled paper paste at a high temperature and high pressure.

12. The method according to claim 11, wherein the paper paste is filled with 0.1-20 parts by weight of the sizing agent, 0.001-5 parts by weight of the strength agent, 0.001-0.5 parts by weight of the retention aid, and 0.1-10 parts by weight of the wet strength agent, on the basis of the total of 100 parts by weight of the pulp fiber and the polymer fiber.

13. The method according to claim 9, wherein the treating at a high temperature and high pressure is carried out under temperature conditions equal to or higher than the glass transition temperature of the polymer fiber and pressure conditions of 0.5-2 kgf/cm².

14. A paper manufactured from the composition for manufacturing paper according to any one of claims 1 to 8.
